# EUROPÄISCHE PATENTSCHRIFT

(11) **EP 2 185 640 B1**
(45) Veröffentlichungstag und Bekanntmachung des Hinweises auf die Patenterteilung: **10.11.2010**
(21) Anmeldenummer: 08785473.3
(22) Anmeldetag: 08.08.2008
(51) Int. Cl.: C08K 5/00, C08L 95/00

(54) **VERFAHREN ZUR GERUCHSVERMINDERUNG BEI BITUMEN**
METHOD FOR REDUCING ODOR IN BITUMEN
PROCÉDÉ DE RÉDUCTION DE L'ODEUR DU BITUME

(30) Priorität: 09.08.2007 DE 102007037543
(43) Veröffentlichungstag der Anmeldung: 19.05.2010
(73) Patentinhaber: AIR & D - SARL, 67190 Rosheim (FR)
(72) Erfinder: WUEST, Robert, F-67190 Rosheim (FR); KERSZENBAUM, Laurent, F-06110 Le Cannet (FR)
(74) Vertreter: Nuss, Pierre
(86) Internationale Anmeldenummer: PCT/EP2008/006585
(87) Internationale Veröffentlichungsnummer: WO 2009/019041

(56) Entgegenhaltungen:
- US-A1- 2003 191 034
- US-B1- 6 461 421
- DATABASE WPI Week 200748 Thomson Scientific, London, GB; AN 2007-489722 XP002504309 -& JP 2007 137922 A (OGAWA KORYO KK) 7. Juni 2007 (2007-06-07)

## Beschreibung

Die Erfindung betrifft ein Verfahren zu Geruchsverminderung bei Bitumen durch Einmischen von aktiven Agenzien.

Bitumen ist eine hochviskose Flüssigkeit oder ein Feststoff, bestehend aus Kohlenwasserstoffen und dessen Derivaten. Es ist in Trichlorethylen löslich und erweicht bei Temperaturen oberhalb von 100 °C und wird oberhalb von etwa 150°C dünnflüssig. Bitumen findet großtechnische Anwendung z.B. als Straßenbelag, wobei eine Mischung aus Bitumen und größeren Mengen Gestein aufgetragen wird, ferner als Isolierschicht gegen Eindringen von Wasser und Feuchtigkeit in Gebäude und zur Herstellung von Dichtungsbahnen und Dachpappe.

Bei allen diesen Anwendungen wird Bitumen in verflüssigter Form oberhalb von etwa 140 °C verarbeitet. Bei diesen Temperaturen verdunstet ein Großteil der im Bitumen enthaltenen flüchtigen Substanzen, z.B. Schwefel- und Stickstoffverbindungen, die zu Geruchsbelästigung führen können.

Die US-A 5,271,767 beschreibt eine geruchsfreie Asphaltzusammensetzung, bei der in flüssigen Asphalt (gemeint ist dabei Bitumen) 0,5 bis 1 Gew.-% einer Mischung aus
10 bis 15 Gew.-% Limonen,
85 bis 90 Gew.-% eines Pflanzenöls und
etwa 2 Gew.-% eines Silikonöls
eingemischt wird.

Dabei müssen verhältnismäßig große Mengen an aktiven Agenzien eingesetzt werden.

Die EP-A 1 235 768 beschreibt eine Zusammensetzung zur Geruchsunterdrückung bei Kohlenwasserstoffen, z.B. Asphalt und Bitumen, aus einem Aldehyd oder Keton und 10 bis 90 Gew.-% eines Carbonsäurealkylesters. Im Beispiel enthält die Zusammensetzung insgesamt 31 Gew.-% Ester und 60 Gew.-% Benzaldehyd. Da Benzaldehyd gesundheitsschädlich ist (siehe Sicherheitsdatenblatt der Fa. Merck vom 31.03.2004) ist diese Zusammensetzung nicht unbedenklich.

Die WO 2004/099352 beschreibt Additive zur Geruchsminderung, z. B für flüssigen Asphaltzement (gemeint ist Bitumen), enthaltend vorzugsweise
35 bis 45 Vol.-% Limonen,
25 bis 35 Vol.-% Kiefernextrakt oder Kiefernöl,
1 bis 5 Vol.-% Pinus Sylvestris Öl,
3 bis 8 Vol.-% Anissamenöl und
20 bis 25 Vol.-% weiterer Öle.

Diese Zusammensetzung kann mit einem Trägeröl, z. B einem Mineralöl, einem Pflanzenöl oder einem Fettsäurealkylester verdünnt werden. Es hat sich aber gezeigt, dass diese Zusammensetzung für die Geruchsverminderung bei Bitumen ebenfalls nicht optimal ist.

In der EP-A 1 772 158 ist ein Verfahren zum Reduzieren von übelriechenden Substanzen in Tankbehältern für Bitumen beschrieben, wobei in den Gasraum über dem Flüssigkeitsspiegel aktive Agenzien zusammen mit einem Inertgas eingeleitet werden. Die aktiven Agenzien können z.B. höhere Aldehyde, Ketone, Ester oder Alkohole sein, z.B. C7- bis C12-Aldehyde oder natürliche ölige Essenzen, wie Harzöle, ferner parfümartige Substanzen, wie Vanillin, Menthol oder alpha-Pinen. Nähere Angaben über die Zusammensetzung der aktiven Agenzien werden nicht gemacht.

Der Erfindung lag daher die Aufgabe zugrunde, ein Verfahren zur Geruchsverminderung bei Bitumen bereitzustellen, bei dem aktive Agenzien in relativ geringen Mengen, die gesundheitlich unbedenklich sind, verwendet werden.

Diese Aufgabe wird durch die Mischung von aktiven Agenzien nach Anspruch 1 gelöst. Diese sollten natürlich selbst nicht übel riechen, d.h., die ausgewählten Substanzen sollten z.B. keine Mercaptan- oder Aminogruppen tragen.

Nach der vorliegenden Erfindung wird die Mischung der aktiven Agenzien nicht in den Gasraum, sondern direkt in das flüssige Bitumen eingemischt, was eine höhere Wirksamkeit ergibt.

Im Rahmen der vorliegenden Erfindung wird handelsübliches Bitumen eingesetzt. Dieses kann Rückstände von der Rohöldestillation enthalten, sowie Rückstände, die durch einen Crack- Prozess erhalten wurden. Auch natürlich vorkommendes Bitumen oder Mischungen verschiedener Arten von Bitumen können eingesetzt werden. Beispiele für solche Bitumen sind Destillationsbitumen, Fällungsbitumen, z.B. Propanbitumen, Oxidbitumen, naphtenbasisches Bitumen und Mischungen davon. Geeignetes Bitumen kann auch durch Mischen mit einem naphtenbasischen oder paraffinbasischen Fluxöl oder einem pflanzlichen Öl hergestellt werden. Es kann auch ein Polymer enthalten, so dass ein polymermodifiziertes Bitumen entsteht. Geeignete Polymere sind thermoplastische Elastomere oder Plastomere, wie z.B. Styrol- Blockcopolymere und/oder Olefincopolymere, wie Ethylen/Vinylacetat- Copolmer.

Der Aldehyd der Komponente A ist ausgewählt aus
A1. alpha-Hexylcinnamaldehyd (Jasmonal H),
A2. 2-(4-tert.-Butylbenzyl)propionaldehyd (Lilial) und
A3. 2-Benzylidenheptanal (Jasminal)
oder Mischungen davon. Bei einer besonders bevorzugen Ausführungsform sind in der Komponente A alle drei genannten Aldehyde enthalten.

Die weiteren optionalen Aldehyde der Komponente B sind vorzugsweise ausgewählt aus:
B1. 3-(4-iso-Propylphenyl)-2-methylpropanal (Cyclamaldehyd), insbesondere in Mengen von 2 bis 12 Gew.-%, und
B2. 2-Methylundecanal, insbesondere in Mengen von 2 bis 8 Gew.-%
B3. 2-Methyl-3-(3,4-methylen-dioxyphenyl)propanal (Helional), insbesondere in Mengen von 0,5 bis 5 Gew.-%
oder Mischungen davon. Bei einer besonders bevorzugten Ausführungsform sind in der Komponente B alle drei genannten Aldehyde enthalten. Darüber hinaus sind auch die in der EP-A 1 235 768 aufgezählten Aldehyde geeignet. Benzaldehyd und Citral sollten vorzugsweise in Mengen von höchstens 5 Gew.-% anwesend sein.

Als Komponente C werden bevorzugt natürich vorkommende Alkohole verwendet. Sie sind vorzugsweise ausgewählt aus
C1. Linalol mit einem Siedepunkt von 198 °C, insbesondere in Mengen von 5 bis 25 Gew.-%,
C2. Eugenol mit einem Siedepunkt von 253 °C, insbesondere in Mengen von 3 bis 12 Gew.-%,
C3. Geraniol mit einem Siedepunkt von 230 °C, insbesondere in Mengen von 3 bis 12 Gew.-% und
C4. alpha-Terpineol mit einem Siedepunkt von 219 °C, insbesondere in Mengen von 0,5 bis 5 Gew.-%
oder Mischungen davon. Bei einer besonders bevorzugten Ausführungsform sind in der Komponente C alle vier genannten Alkohole enthalten. Auch andere Alkohole, z.B. Vanillin und Thymol sind geeignet.

Die optionalen Terpene der Komponente D sind vorzugsweise ausgewählt aus
D1. Limonen mit einem Siedepunkt von 176 °C, insbesondere in Mengen von 0,5 bis 5 Gew.-%, und
D2. alpha-Pinen mit einem Siedepunkt von 156 °C, insbesondere in Mengen von 0,5 bis 5 Gew.-%
oder Mischungen davon. In einer besonders bevorzugten Ausführungsform sind in der Komponente D alle beiden genannten Terpene enthalten. Auch in natürlichen Essenz-Ölen vorkommende Terpene, sowie die in der WO-A 2004/099 352 aufgezählten Terpene sind geeignet.

Als Ketone in der optionalen Komponente E sind z.B. geeignet: Benzophenon, Butyl-methyl-Keton und 1,8-Cineol, sowie andere, in natürlichen Essenz-Ölen vorkommende Ketone. Auch die in der WO-A 2004/099 352 aufgezählten Ketone sind geeignet.

Als Carbonsäureester der optionalen Komponente F sind z.B. geeignet: Benzylsalicylat, Amylbutyrat, Ethylbutyrat und Amylacetat, sowie andere, in der EP-A 1 235 768 aufgezählte Carbonsäureester.

Vorzugsweise wird in das flüssige Bitumen ein Gemisch aus den aktiven Agenzien und einem Verdünnungsmittel eingemischt. Dieses Verdünnungsmittel wirkt gleichzeitig als Mischungsvermittler beim Mischen der einzelnen Komponenten.

Das Gemisch enthält vorzugsweise 5 bis 50, insbesondere 10 bis 40 Gew.-%, aktive Agenzien und 95 bis 50, insbesondere 90 bis 60 Gew.-% Verdünnungsmittel.

Bevorzugte Verdünnungsmittel sind Mineralöle, d.h. Kohlenwasserstoffmitteldestillate, wie z.B. CATENEX der Fa. Shell, sowie Pflanzenöle, wie Sonnenblumenöl, welches überwiegend aus Linolsäure besteht. Als günstig hat sich auch eine Mischung aus CATENEX und Sonnenblumenöl herausgestellt, die sich durch einen besonders hohen Flammpunkt auszeichnet, wodurch die Gefahr der Entzündung herabgesetzt wird.

Die Mischung aus aktiven Agenzien und Verdünnungsmittel wird in das flüssige Bitumen vorzugsweise in Mengen von 10 bis 200 ppm, insbesondere von 20 bis 180 ppm und ganz speziell in Mengen von 50 bis 150 ppm eingemischt. Dies geschieht vorzugsweise bei Temperaturen oberhalb von 140°C, insbesondere bei Temperaturen zwischen 150 und 250°C.

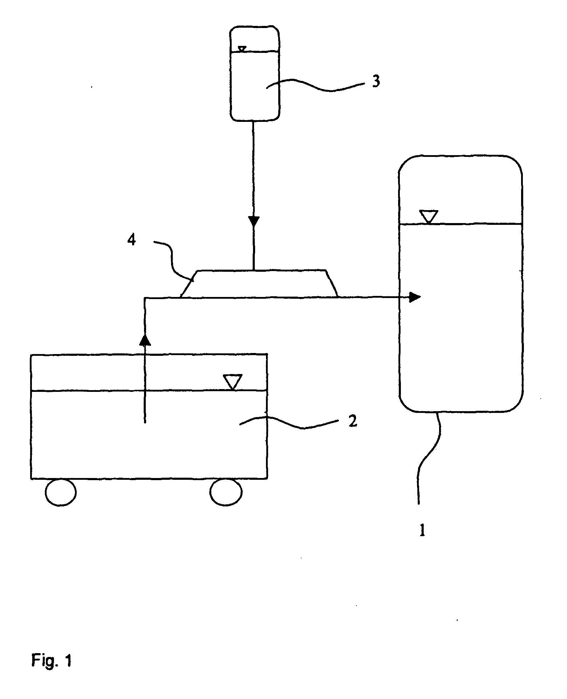

Die Mischung kann grundsätzlich direkt in das in einem Tankbehälter oder in einem Lastkraftwagen befindliche flüssige Bitumen eingetragen werden. Da aber flüssiges Bitumen im allgemeinen von Lastkraftwagen angeliefert und durch einen Schlauch oder vorzugsweise ein Rohr in den Tankbehälter eingefüllt wird, ist es zweckmäßig, die Mischung aus einem Vorratsgefäß über eine Dosierpumpe durch eine Seitenleitung in das Rohr einzuführen. Dabei kann das Rohr an einer Stelle in zwei Kanäle in Form eines Bypass aufgeteilt werden, wobei in den Kanal mit dem größeren Durchmesser die Hauptmenge des flüssigen Bitumens fließt, während die Mischung aus aktiven Agenzien und Verdünnungsmittel in den dünneren Bypass-Kanal eingeführt wird. Dadurch wird die Dosierung erleichtert und man erhält eine bessere Homogenisierung der Mischung. In der Zeichnung ist diese Dosierung skizziert. Mit 1 ist der Bitumentank bezeichnet, mit 2 der LKW, aus dem das Bitumen in den Tank überführt wird, mit 3 das Vorratsgefäß für die Mischung mit den aktiven Agenzien und mit 4 der Bypass.

Es wird angenommen, dass die genannten aktiven Agenzien, insbesondere die Aldehyde, eine chemische Reaktion mit den übel riechenden Substanzen, z.B. mit Mercaptanen und Aminen, eingehen und diese dadurch entfernen bzw. neutralisieren.

Durch das erfindungsgemäße Verfahren lässt sich der üble Geruch bei der Verarbeitung von flüssigem Bitumen um 60 bis 90%, in manchen Fällen sogar um mehr als 90% vermindern, was durch olfaktorische Messung festgestellt werden kann.

### Beispiel 1

Ein Gemisch von aktiven Agenzien wird hergestellt aus:
22,9 Gew.-Teilen alpha-Hexylcinnamaldehyd
19,1 Gew.-Teilen 2-Benzylidenheptanal
9,8 Gew.-Teilen 2-(4-tert.-Butylbenzyl)propionaldehyd
16,5 Gew.-Teilen Linalol
7,7 Gew.-Teilen Eugenol
7,7 Gew.-Teilen Geraniol
7,7 Gew.-Teilen 3-(4-iso-Propylphenyl)-2-methylpropanal
3,1 Gew.-Teilen 2-Methylundecanal
1,9 Gew.-Teilen alpha-Terpineol
1,2 Gew.-Teilen Limonen
1,2 Gew.-Teilen 2-Methyl-3-(3,4-methylen-dioxyphenyl)-propänal
1,2 Gew.-Teilen alpha-Pinen.

30 Gew.-Teile dieses Gemisches wurden mit 70 Gew.-Teilen CATENEX als Verdünnungsmittel vermischt. Der Flammpunkt (open cup) dieser Mischung betrug 165 °C.

In einen Lastkraftwagen mit 25 t flüssigem, 170°C heißem Bitumen wurden 3,75 kg (150 ppm) der obigen Mischung eingeführt.

### Beispiel 2

30 Gew.-Teile des Gemisches aus Beispiel 1 wurden mit 70 Gew.-Teilen einer Mischung aus CATENEX und Sonnenblumenöl im Verhältnis 85 : 15 als Verdünnungsmittel vermischt. Der Flammpunkt (open cup) dieser Mischung betrug 168 °C.

Aus einem Lastkraftwagen wurde flüssiges Bitumen in einen Tank mit einem Fassungsvermögen von 25 t über ein Rohr eingefüllt. Dieses war in zwei Kanäle mit einem Innendurchmesser von 200 mm bzw. 20 mm aufgeteilt. In den dünneren Rohrkanal wurden 2,5 kg (100 ppm) der obigen Mischung eingeführt.

## Patentansprüche

1. Verfahren zur Geruchsverminderung von Bitumen durch Einmischen von aktiven Agenzien und einem Verdünnungsmittel in flüssiges Bitumen,
**dadurch gekennzeichnet,**
**dass** die aktiven Agenzien enthalten:
A: 20 bis 60 Gew.-% eines Aldehyds, ausgewählt aus
A1. alpha-Hexylcinnamaldehyd,
A2. 2-(4-tert.-Butylbenzyl)propionaldehyd,
A3. 2-Benzylidenheptanal
oder Mischungen davon,
B: 0 bis 20 Gew.-% eines oder mehrerer weiterer Aldehyde mit mindestens 10 Kohlenstoffatomen im Molekül,
C: 10 bis 40 Gew.-% eines oder mehrerer Alkohole mit einem Siedepunkt von mindestens 150 °C,
D: 0 bis 20 Gew.-% eines oder mehrerer Terpene mit einem Siedepunkt von mindestens 150 °C,
E: 0 bis 10 Gew.-% eines Ketons mit einem Siedepunkt von mindestens 150 °C
F: 0 bis 10 Gew.-% eines Carbonsäureesters,
wobei sich die Prozentzahlen auf 100 addieren.

2. Verfahren nach Anspruch 1, **dadurch gekennzeichnet, dass** die Aldehyde der Komponente B ausgewählt sind aus:
B1. 3-(4-iso-Propylphenyl)2-methylpropanal
B2. 2-Methylundecanal
B3. 2-Methyl-3-(3,4-methylen-dioxyphenyl)-propanal
oder Mischungen davon.

3. Verfahren nach Anspruch 1, **dadurch gekennzeichnet, dass** Benzaldehyd und Citral in Mengen von höchstens 5 Gew.-% anwesend sind.

4. Verfahren nach Anspruch 1, **dadurch gekennzeichnet, dass** die Alkohole der Komponente C ausgewählt sind aus
C1. Linalol,
C2. Eugenol
C3. Geraniol und
C4. alpha-Terpineol
oder Mischungen davon.

5. Verfahren nach Anspruch 1, **dadurch gekennzeichnet, dass** die Terpene der Komponente D ausgewählt sind aus:
D1. Limonen und
D2. alpha-Pinen
oder Mischungen davon.

6. Verfahren nach Anspruch 1, **dadurch gekennzeichnet, dass** man in flüssiges Bitumen eine Mischung einmischt aus
5 bis 50 Gew.-% der aktiven Agenzien und
95 bis 50 Gew.-% eines Verdünnungsmittels, vorzugsweise eines Mineralöls.

7. Verfahren nach Anspruch 6, **dadurch gekennzeichnet, dass** man in flüssiges Bitumen 10 bis 200 ppm der Mischung aus aktiven Agenzien und Verdünnungsmittel einmischt.

8. Verfahren nach Anspruch 6 oder 7, **dadurch gekennzeichnet, dass** die Einmischung bei Temperaturen oberhalb von 140°C vorgenommen wird.

9. Bitumen enthaltend 10 bis 200 ppm einer Mischung aus 5 bis 50 Gew.-% aktiver Agenzien aus
A: 20 bis 60 Gew.-% eines Aldehyds, ausgewählt aus
A1. alpha-Hexylcinnamaldehyd,
A2. 2-(4-tert.-Butylbenzyl)propionaldehyd,
A3. 2-Benzylidenheptanal
oder Mischungen davon,
B: 0 bis 20 Gew.-% eines oder mehrerer weiterer Aldehyde mit mindestens 10 Kohlenstoffatomen im Molekül,
C: 10 bis 40 Gew.-% eines oder mehrerer natürlich vorkommender Alkohole mit einem Siedepunkt von mindestens 150 °C,
D: 0 bis 20 Gew.-% eines oder mehrerer Terpene mit einem Siedepunkt von mindestens 150 °C,
E: 0 bis 10 Gew.-% eines Ketons mit einem Siedepunkt von mindestens 150 °C
F: 0 bis 10 Gew.-% eines Carbonsäureesters,
wobei sich die Prozentzahlen auf 100 addieren und
95 bis 50 Gew.-% eines Verdünnungsmittels, vorzugsweise eines Mineralöls.

## Claims

1. Method for reducing the odour of bitumen by incorporating active agents and a thinning agent into liquid bitumen,
**characterised in that**
the active agents include:
A: 20 to 60 wt.% of an aldehyde selected from
A1. alpha-hexylcinnamaldehyde,
A2. 2-(4-tert-butylbenzyl)propionaldehyde,
A3. 2-benzylidenheptanal
or mixtures thereof
B: 0 to 20 wt.% of one or more additional aldehydes with at least 10 carbon atoms in a molecule,
C: 10 to 40 wt.% of one or more alcohols with a boiling point of at least 150°C,
D: 0 to 20 wt.% of one or more terpenes with a boiling point of at least 150°C,
E: 0 to 10 wt.% of a ketone with a boiling point of at least 150°C,
F: 0 to 10 wt.% of a carboxylic acid ester,
wherein the percentages add up to 100.

2. Method according to claim 1, **characterised in that** the aldehydes of component B are selected from:
B1. 3-(4-isopropylphenyl)2-methylpropanal
B2. 2-methylundecanal
B3. 2-methyl-3-(3,4-methylenedioxyphenyl)-propanal
or mixtures thereof.

3. Method according to claim 1, **characterised in that** benzaldehyde and citral are included in amounts of at most 5 wt.%.

4. Method according to claim 1, **characterised in that** the alcohols of component C are selected from
C1. linalol,
C2. eugenol
C3. geraniol and
C4. alpha-terpineol
or mixtures thereof.

5. Method according to claim 1, **characterised in that** the terpenes of component D are selected from:
D1. limonene and
D2. alpha-pinene
or mixtures thereof.

6. Method according to claim 1, **characterised in that** a mixture of 5 to 50 wt.% of the active agents and 95 to 50 wt.% of a thinning agent, preferably a mineral oil, are mixed into liquid bitumen.

7. Method according to claim 6, **characterised in that** 10 to 200 ppm of the mixture of active agents and thinning agent are mixed into the liquid bitumen.

8. Method according to claim 6 or 7, **characterised in that** the mixing takes place at temperatures above 140°C.

9. Bitumen containing 10 to 200 ppm of a mixture of 5 to 50 wt.% of active agents from
A: 20 to 60 wt.% of an aldehyde selected from
A1. alpha-hexylcinnamaldehyde,
A2. 2-(4-tert-butylbenzyl)propionaldehyde,
A3. 2-benzylidenheptanal
or mixtures thereof
B: 0 to 20 wt.% of one or more additional aldehydes with at least 10 carbon atoms in a molecule,
C: 10 to 40 wt.% of one or more naturally occurring alcohols with a boiling point of at least 150°C,
D: 0 to 20 wt.% of one or more terpenes with a boiling point of at least 150°C,
E: 0 to 10 wt.% of a ketone with a boiling point of at least 150°C,
F: 0 to 10 wt.% of a carboxylic acid ester,
wherein the percentages add up to 100 and
95 to 50 wt.% of a thinning agent, preferably a mineral oil.

## Revendications

1. Procédé pour réduire les odeurs de bitume par incorporation d'agents actifs et d'un diluant dans un bitume liquide, **caractérisé en ce que** les agents actifs contiennent :
A : 20 à 60 % en poids d'un aldéhyde, sélectionné parmi :
A1. l'alpha-hexylcinnamaldéhyde,
A2. le 2-(4-tert.-butylbenzyl)propionaldéhyde,
A3. le 2-benzylidèneheptanal,
ou des mélanges de ceux-ci,
B: 0 à 20 % en poids d'un ou de plusieurs autres aldéhydes comportant au moins 10 atomes de carbone dans la molécule,
C: 10 à 40 % en poids d'un ou de plusieurs alcools présentant un point d'ébullition au moins égal à 150 °C,
D: 0 à 20 % en poids d'un ou de plusieurs terpènes présentant un point d'ébullition au moins égal à 150 °C,
E: 0 à 10 % en poids d'une cétone présentant un point d'ébullition au moins égal à 150 °C,
F: 0 à 10 % en poids d'un ester d'acide carboxylique,
où les pourcentages indiqués s'ajoutent pour donner 100.

2. Procédé selon la revendication 1, **caractérisé en ce que** les aldéhydes du composant B sont sélectionnés parmi :
B1. le 3-(4-iso-propylphényl)2-méthylpropanal,
B2. le 2-méthylundécanal,
B3. le 2-méthyl-3-(3,4-méthylène-dioxyphényl)-propanal,
ou des mélanges de ceux-ci.

3. Procédé selon la revendication 1, **caractérisé en ce que** du benzaldéhyde et du citral sont présents dans des quantités au plus égales à 5 % en poids.

4. Procédé selon la revendication 1, **caractérisé en ce que** les alcools du composant C sont sélectionnés parmi :
C1. le linalol,
C2. l'eugénol,
C3. le géraniol, et
C4. l'alpha-terpinéol,
ou des mélanges de ceux-ci.

5. Procédé selon la revendication 1, **caractérisé en ce que** les terpènes du composant D sont sélectionnés parmi :
D1. le limonène, et
D2. l'alpha-pinène,
ou des mélanges de ceux-ci.

6. Procédé selon la revendication 1, **caractérisé en ce que** l'on incorpore dans du bitume liquide un mélange composé de :
5 à 50 % en poids des agents actifs, et de
95 à 50 % en poids d'un diluant, de préférence d'une huile minérale.

7. Procédé selon la revendication 6, **caractérisé en ce que** l'on incorpore dans du bitume liquide 10 à 200 ppm du mélange composé des agents actifs et du diluant.

8. Procédé selon la revendication 6 ou 7, **caractérisé en ce que** l'incorporation est entreprise à des températures supérieures à 140 °C.

9. Bitume contenant 10 à 200 ppm d'un mélange composé de 5 à 50 % en poids d'agents actifs composés de :
A : 20 à 60 % en poids d'un aldéhyde, sélectionné parmi
A1. l'alpha-hexylcinnamaldéhyde,
A2. le 2-(4-tert.-butylbenzyl)propionaldéhyde,
A3. le 2-benzylidèneheptanal,
ou des mélanges de ceux-ci,
B : 0 à 20 % en poids d'un ou de plusieurs autres aldéhydes comportant au moins 10 atomes de carbone dans la molécule,
C : 10 à 40 % en poids d'un ou de plusieurs alcools naturels présentant un point d'ébullition au moins égal à 150 °C,
D : 0 à 20 % en poids d'un ou de plusieurs terpènes présentant un point d'ébullition au moins égal à 150 °C,
E : 0 à 10 % en poids d'une cétone présentant un point d'ébullition au moins égal à 150 °C,
F : 0 à 10 % en poids d'un ester d'acide carboxylique,
où les pourcentages indiqués s'ajoutent pour donner 100, et de
95 à 50 % en poids d'un diluant, de préférence d'une huile minérale.
